# EUROPÄISCHE PATENTSCHRIFT

(11) **EP 2 948 353 B1**
(45) Veröffentlichungstag und Bekanntmachung des Hinweises auf die Patenterteilung: **01.06.2022**
(21) Anmeldenummer: 13824583.2
(22) Anmeldetag: 21.12.2013
(51) Int. Cl.: B60W 10/06, B60W 10/08, B60W 10/24, B60W 20/00, B60K 6/448, B60K 6/52

(54) **VERFAHREN ZUM BETREIBEN EINER HYBRIDANTRIEBSEINRICHTUNG EINES KRAFTFAHRZEUGS, ENTSPRECHENDE HYBRIDANTRIEBSEINRICHTUNG SOWIE KRAFTFAHRZEUG**
METHOD FOR OPERATING A HYBRID DRIVE DEVICE OF A MOTOR VEHICLE, CORRESPONDING HYBRID DRIVE DEVICE AND MOTOR VEHICLE
PROCÉDÉ POUR FAIRE FONCTIONNER UN SYSTÈME DE PROPULSION HYBRIDE D'UN VÉHICULE À MOTEUR, SYSTÈME DE PROPULSION HYBRIDE CORRESPONDANT ET VÉHICULE À MOTEUR

(30) Priorität: 23.01.2013 DE 102013001095
(43) Veröffentlichungstag der Anmeldung: 02.12.2015
(73) Patentinhaber: Audi AG, 85045 Ingolstadt (DE)
(72) Erfinder: BLASINSKI, Boris, 85080 Gaimersheim (DE); KASTENEDER, Rene, 85126 Münchsmünster (DE)
(86) Internationale Anmeldenummer: PCT/EP2013/003932
(87) Internationale Veröffentlichungsnummer: WO 2014/114321

(56) Entgegenhaltungen:
- WO-A1-2012/000806
- WO-A2-2008/047029
- DE-A1-102010 018 987
- US-B1- 6 484 833

## Beschreibung

Die Erfindung betrifft ein Verfahren zum Betreiben einer Hybridantriebseinrichtung eines Kraftfahrzeugs, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist, wobei die zum Betreiben des zweiten Elektromotors verwendete elektrische Energie in einer ersten Betriebsart von dem, von der Brennkraftmaschine unter Anhebung ihrer Leistung angetriebenen ersten Elektromotor erzeugt wird und in einer zweiten Betriebsart ausschließlich einem Energiespeicher für elektrische Energie entnommen wird, und wobei in einer dritten Betriebsart der Energiespeicher mittels des von der Brennkraftmaschine unter Anhebung ihrer Leistung angetriebenen ersten Elektromotors aufgeladen wird. Die Erfindung betrifft weiterhin eine Hybridantriebseinrichtung eines Kraftfahrzeugs sowie ein entsprechendes Kraftfahrzeug.

Die Hybridantriebseinrichtung dient dem Antreiben des Kraftfahrzeugs und weist zu diesem Zweck mehrere Antriebsaggregate auf, von welchen wenigstens zwei unterschiedlichen Typs sind. Eines der Antriebsaggregate liegt beispielsweise in Form der Brennkraftmaschine vor, während der erste Elektromotor und der zweite Elektromotor weitere der Antriebsaggregate darstellen. Das Kraftfahrzeug weist wenigstens zwei Achsen, nämlich die erste Achse und die zweite Achse, auf. Die Brennkraftmaschine sowie der erste Elektromotor sind mit der ersten Achse wirkverbindbar beziehungsweise wirkverbunden. Beispielsweise liegt dabei in der Wirkverbindung zwischen der ersten Achse und der Brennkraftmaschine eine Trennkupplung vor, sodass die Wirkverbindung zumindest zeitweise unterbrechbar ist. Der erste Elektromotor ist vorzugsweise permanent mit der ersten Achse wirkverbunden. Alternativ kann jedoch auch hier eine Trennkupplung in der Wirkverbindung zwischen dem ersten Elektromotor und der ersten Achse des Kraftfahrzeugs vorgesehen sein. Der zweite Elektromotor ist mit der zweiten Achse des Kraftfahrzeugs wirkverbindbar beziehungsweise wirkverbunden. Vorzugsweise ist dies, wie bereits vorstehend für den ersten Elektromotor beschrieben, permanent der Fall. Auch hier kann jedoch alternativ eine Trennkupplung in der Wirkverbindung zwischen dem zweiten Elektromotor und der zweiten Achse vorgesehen sein.

Das Kraftfahrzeug verfügt insoweit über wenigstens zwei antreibbare Achsen, weil die erste Achse mit der Brennkraftmaschine, dem ersten Elektromotor oder beiden gemeinsam antreibbar ist. Die zweite Achse dagegen ist mittels des zweiten Elektromotors antreibbar. Unter dem Begriff "Antreiben" ist dabei das Bereitstellen eines beliebig gerichteten Drehmoments an der jeweiligen Achse zu verstehen. Das Drehmoment kann also sowohl auf ein Beschleunigen als auch auf ein Verzögern des Kraftfahrzeugs gerichtet sein. Besonders bevorzugt stellen die erste Achse und die zweite Achse die einzigen Achsen des Kraftfahrzeugs dar; das Kraftfahrzeug weist also nur die erste Achse und die zweite Achse auf. Entsprechend kann das Kraftfahrzeug zumindest zeitweise als allradgetriebenes Kraftfahrzeug vorliegen.

Mithilfe einer derartigen Hybridantriebseinrichtung kann auf einfache Art und Weise wahlweise lediglich die erste Achse, lediglich die zweite Achse oder sowohl die erste Achse als auch die zweite Achse angetrieben werden. Weil jedoch die erste Achse des Kraftfahrzeugs mit der Brennkraftmaschine wirkverbindbar ist, wird sie als Primärachse bezeichnet, während die zweite Achse eine Sekundärachse darstellt. Bevorzugt wird die zweite Achse lediglich dann mithilfe des zweiten Elektromotors angetrieben, wenn gleichzeitig die erste Achse mithilfe der Brennkraftmaschine und/oder des ersten Elektromotors ebenfalls angetrieben wird. Es kann also vorgesehen sein, dass der zweite Elektromotor lediglich dann zum Antreiben der zweiten Achse betrieben wird, wenn auch die Brennkraftmaschine, der erste Elektromotor oder beide betrieben werden, also zur Bereitstellung eines an der ersten Achse anliegenden Drehmoments dienen. Die Hybridantriebseinrichtung dient dazu, sowohl die Vorteile eines Einachsantriebs, also eines Antriebs lediglich der ersten Achse, als auch eines Mehrachsantriebs, bei welchem sowohl die erste Achse als auch die zweite Achse des Kraftfahrzeugs angetrieben werden, zu realisieren. Allerdings hat der Mehrachsantrieb einen nachteiligen Einfluss auf den Kraftstoffverbrauch der Hybridantriebseinrichtung und mithin des Kraftfahrzeugs.

Aus dem Stand der Technik ist zum Beispiel die Druckschrift WO 2008/047029 A2 bekannt. Diese zeigt eine Hybridantriebseinrichtung gemäß dem Oberbegriff des Anspruchs 1. Weiterhin offenbaren die Druckschrift DE 10 2010 018 987 A1 einen Hybridantriebsstrang, die Druckschrift US 6,484,833 B1 eine Vorrichtung sowie ein Verfahren zum Erhalten eines Ladezustands während eines Fahrzeugbetriebs und die Druckschrift WO 2012/000806 A1 ein Verfahren zur Steuerung eines Hybridfahrzeugs.

Es ist daher Aufgabe der Erfindung, ein Verfahren zum Betreiben einer Hybridantriebseinrichtung vorzuschlagen, welches diesen Nachteil nicht aufweist, sondern insbesondere die Vorteile des Einachsantriebs und des Mehrachsantriebs bei gleichzeitiger Reduzierung des Kraftstoffverbrauchs kombiniert.

Dies wird erfindungsgemäß mit einem Verfahren mit den Merkmalen des Anspruchs 1 erreicht. Dabei ist vorgesehen, dass bei einer Anforderung eines von dem zweiten Elektromotor erzeugten Drehmoments bei Unterschreiten eines ersten Schwellenwerts durch den Ladestand des Energiespeichers die erste Betriebsart und ansonsten die zweite Betriebsart ausgewählt wird, und dass die dritte Betriebsart ausgewählt wird, wenn kein von dem zweiten Elektromotor erzeugtes Drehmoment angefordert wird und eine während des Aufladens des Energiespeichers durch das Anheben der Leistung der Brennkraftmaschine erwartete Schallemission kleiner als ein Grenzwert ist, wobei die dritte Betriebsart nur dann ausgewählt wird, wenn der Ladestand des Energiespeichers kleiner als ein von dem ersten Schwellenwert verschiedener zweiter Schwellenwert ist.

Grundsätzlich ist vorgesehen, dass die zum Betreiben des zweiten Elektromotors verwendete elektrische Energie in einer ersten Betriebsart von dem, von der Brennkraftmaschine unter Anhebung ihrer Leistung angetriebenen ersten Elektromotor erzeugt wird und in einer zweiten Betriebsart ausschließlich einem Energiespeicher für elektrische Energie entnommen wird. Die Hybridantriebseinrichtung kann mithin in wenigstens zwei Betriebsarten betrieben werden, nämlich in der ersten Betriebsart und der zweiten Betriebsart. In beiden Betriebsarten soll der zweite Elektromotor betrieben werden, insbesondere zum Antreiben der zweiten Achse des Kraftfahrzeugs. Vorzugsweise werden gleichzeitig sowohl in der ersten Betriebsart als auch in der zweiten Betriebsart die Brennkraftmaschine und/oder der erste Elektromotor zum Antreiben der ersten Achse verwendet, sodass sowohl die erste Achse als auch die zweite Achse des Kraftfahrzeugs angetrieben werden.

In der ersten Betriebsart ist es nun vorgesehen, die elektrische Energie, die zum Betreiben des zweiten Elektromotors benötigt wird, mittels des ersten Elektromotors zu erzeugen, welcher zu diesem Zweck als Generator betrieben wird. Dabei wird der erste Elektromotor von der Brennkraftmaschine angetrieben. Es ist also notwendig, die Leistung der Brennkraftmaschine anzuheben, um das von dem ersten Elektromotor zur Erzeugung der elektrischen Energie benötigte Drehmoment beziehungsweise die entsprechende Leistung bereitzustellen. Dies gilt umso mehr, wenn die Brennkraftmaschine gleichzeitig sowohl mit dem ersten Elektromotor als auch mit der ersten Achse wirkverbunden ist, also auch zum Antreiben der ersten Achse verwendet wird. In diesem Fall muss sie ein Drehmoment beziehungsweise eine Leistung bereitstellen, welches beziehungsweise welche sowohl zum Antreiben der ersten Achse als auch zum Erzeugen der von dem zweiten Elektromotor benötigten elektrischen Energie mittels des ersten Elektromotors ausreicht. Die Anhebung der Leistung der Brennkraftmaschine wird auch als Lastanhebung bezeichnet.

Diese Vorgehensweise ist für zahlreiche Betriebsbereiche der Brennkraftmaschine sinnvoll und notwendig. Sie hat jedoch den Nachteil, dass zu einem Zeitpunkt, in welchem die Brennkraftmaschine ohnehin durch das Antreiben der ersten Achse belastet, also mit einer bestimmten Last beaufschlagt ist, zusätzliche Leistung zum Betreiben des ersten Elektromotors bereitgestellt werden muss, damit der zweite Elektromotor mit einer ausreichenden Menge an elektrischer Energie versorgt werden kann. Aus diesem Grund ist die zweite Betriebsart vorgesehen. In dieser wird die zum Betreiben des zweiten Elektromotors verwendete elektrische Energie ausschließlich dem Energiespeicher entnommen. Das bedeutet, dass in diesem Fall keine Anhebung der Leistung der Brennkraftmaschine notwendig ist und auch nicht durchgeführt wird. Beispielsweise wird in der zweiten Betriebsart die erste Achse nur mithilfe der Brennkraftmaschine angetrieben, während die zweite Achse (nur) mithilfe des zweiten Elektromotors angetrieben wird, wobei die dafür notwendige elektrische Energie dem Energiespeicher entnommen wird.

Das bedeutet, dass der erste Elektromotor in der zweiten Betriebsart nicht betrieben wird. Alternativ kann es selbstverständlich auch vorgesehen sein, dass die erste Achse sowohl mit der Brennkraftmaschine als auch mit dem ersten Elektromotor angetrieben wird. Dabei wird auch der erste Elektromotor mit dem Energiespeicher entnommener Energie betrieben. Eine solche Vorgehensweise kann zum Durchführen eines sogenannten "Boostbetriebs" dienen.

Auch in der zweiten Betriebsart dient der zweite Elektromotor dem Antreiben der zweiten Achse. In diesem Fall ist es vorzugsweise vorgesehen, dass sowohl der erste Elektromotor als auch der zweite Elektromotor ausschließlich mit der dem Energiespeicher entnommenen elektrischen Energie betrieben wird. In der zweiten Betriebsart werden die vorstehend für die erste Betriebsart genannten Nachteile vermieden. Ein Aufladen des Energiespeichers kann beispielsweise mithilfe des ersten Elektromotors vorgenommen werden, welcher zu diesem Zweck von der Brennkraftmaschine angetrieben wird. Dies kann jedoch zu einem Zeitpunkt erfolgen, an welchem eine dazu notwendige Anhebung der Leistung der Brennkraftmaschine keine nachteiligen Auswirkungen, insbesondere auf einen Fahrkomfort des Kraftfahrzeugs, hat.

Eine weitere Ausgestaltung der Erfindung sieht vor, dass die Leistung der Brennkraftmaschine in der ersten Betriebsart derart angehoben wird, dass der zweite Elektromotor ausschließlich mit der von dem ersten Elektromotor erzeugten elektrischen Energie betrieben wird. Es ist insbesondere nicht vorgesehen, zusätzlich dem Energiespeicher elektrische Energie zu entnehmen, um den zweiten Elektromotor anzutreiben. Dies soll allein mithilfe derjenigen elektrischen Energie erfolgen, welche mittels des ersten Elektromotors erzeugt wird. Das bedeutet, dass die Leistung der Brennkraftmaschine entsprechend angehoben werden muss, insbesondere unter Berücksichtigung der Wirkungsgrade des ersten Elektromotors und des zweiten Elektromotors. Mithin muss die Leistung der Brennkraftmaschine, falls die Wirkungsgrade kleiner als 1 sind, um eine Leistungsdifferenz angehoben werden, welche größer ist als die Leistung, welche der zweite Elektromotor zum Antreiben der zweiten Achse bereitstellt.

Gemäß der Erfindung ist vorgesehen, dass in einer dritten Betriebsart der Energiespeicher mittels des von der Brennkraftmaschine unter Anhebung ihrer Leistung angetriebenen ersten Elektromotors aufgeladen wird. Das vorstehend bereits erwähnte Aufladen des Energiespeichers wird mithin in der dritten Betriebsart vorgenommen. Auch hierzu ist die Anhebung der Leistung notwendig. In der dritten Betriebsart kann die Anhebung jedoch unabhängig von der Leistung erfolgen, welche in der zweiten Betriebsart von dem zweiten Elektromotor zum Antreiben der zweiten Achse bereitgestellt wird. Insbesondere kann nun die Anhebung der Leistung auf einen Betriebspunkt erfolgen, welcher besonders günstige Betriebseigenschaften aufweist, beispielsweise einen geringen Kraftstoffverbrauch und/oder geringe Schadstoffemissionen.

Dabei kann es beispielsweise vorgesehen sein, dass in der dritten Betriebsart die Leistung der Brennkraftmaschine um eine Leistungsdifferenz angehoben wird, welche geringer ist als die (mittlere) elektrische Leistung, welche in der zuvor durchgeführten zweiten Betriebsart von dem zweiten Elektromotor aufgenommen wurde. Dafür kann sich die Anhebung der Leistung jedoch über einen Zeitraum erstrecken, welcher länger ist als derjenige Zeitraum, über welchen die zweite Betriebsart vorgenommen wurde. Auf diese Art und Weise wird auch in der dritten Betriebsart ein hoher Komfort der Fahrzeuginsassen des Kraftfahrzeugs sichergestellt.

Weiterhin sieht die Erfindung vor, dass bei einer Anforderung eines von dem zweiten Elektromotor erzeugten Drehmoments bei Unterschreiten eines ersten Schwellenwerts durch den Ladestand des Energiespeichers die erste Betriebsart und ansonsten die zweite Betriebsart ausgewählt wird. Sobald also der zweite Elektromotor betrieben werden soll, um die zweite Achse anzutreiben, muss entschieden werden, auf welche Art und Weise die dazu notwendige elektrische Energie bereitgestellt werden soll. In der ersten Betriebsart wird sie mittels des ersten Elektromotors erzeugt, während sie in der zweiten Betriebsart ausschließlich dem Energiespeicher entnommen wird. Aus diesem Grund ist es vorteilhaft, die Entscheidung für die anzuwendende Betriebsart von dem Ladestand des Energiespeichers abhängig zu machen. Dieser Energiespeicher ist beispielsweise als Akkumulator, insbesondere als Hochvoltbatterie, ausgeführt.

Ist der Ladestand nun zu niedrig, so ist ein Betreiben des zweiten Elektromotors ausschließlich mit dem Energiespeicher entnommener elektrischer Energie nicht möglich. Entsprechend wird die erste Betriebsart ausgewählt, wenn der erste Schwellenwert durch den Ladestand unterschritten wird. Vorzugsweise wird dies bereits geprüft, bevor der zweite Elektromotor in Betrieb genommen wird. Selbstverständlich kann jedoch auch während des Betriebs des zweiten Elektromotors die Betriebsart gewechselt werden. Wird beispielsweise die Hybridantriebseinrichtung in der zweiten Betriebsart betrieben, weil bei der Anforderung des von dem zweiten Elektromotor erzeugten Drehmoments der Ladestand des Energiespeichers noch ausreichend hoch war, insbesondere den ersten Schwellenwert überschritten hat, und sinkt während des Betreibens des zweiten Elektromotors zum Antreiben der zweiten Achse der Ladestand unter den ersten Schwellenwert, so ist es vorteilhaft, aus der zweiten Betriebsart in die erste Betriebsart zu wechseln, auch wenn dies unter Umständen zu einer Beeinträchtigung des Fahrkomforts der Fahrzeuginsassen des Kraftfahrzeugs führt.

Die Erfindung sieht weiterhin vor, dass die dritte Betriebsart ausgewählt wird, wenn kein von dem zweiten Elektromotor erzeugtes Drehmoment angefordert wird und eine während des Aufladens des Energiespeichers durch das Anheben der Leistung der Brennkraftmaschine erwartete Schallemission kleiner als ein Grenzwert ist. Das Aufladen des Energiespeichers erfolgt mithin vorzugsweise nur dann, wenn die zweite Achse nicht angetrieben wird beziehungsweise nicht angetrieben werden soll. Als zweite Bedingung für das Einleiten beziehungsweise Durchführen der dritten Betriebsart wird die zu erwartende Schallemission herangezogen. Ist diese größer oder gleich dem Grenzwert, so wird die dritte Betriebsart nicht eingeleitet oder, falls dies bereits vorgenommen wurde, die dritte Betriebsart beendet. Dies kann beispielsweise der Fall sein, wenn die Brennkraftmaschine bereits in einem Betriebspunkt betrieben wird, in welchem eine sehr geringe Schallemission vorliegt. Jede Vergrößerung der Schallemission würde nun den Insassen des Kraftfahrzeugs negativ auffallen, sodass sie vermieden werden soll.

Zudem sieht die Erfindung vor, dass die dritte Betriebsart nur dann ausgewählt wird, wenn der Ladestand des Energiespeichers kleiner als ein zweiter Schwellenwert ist. Selbstverständlich ist ein Aufladen des Energiespeichers nicht notwendig, wenn dieser bereits einen ausreichenden Ladestand aufweist, der Ladestand also größer als der zweite Schwellenwert ist. Gemäß der Erfindung ist der zweite Schwellenwert von dem ersten Schwellenwert verschieden, insbesondere größer, sodass stets ein ausreichender Ladestand für eine zu erwartende Anforderung an den zweiten Elektromotor zum Erzeugen eines Drehmoments vorhanden ist.

Schließlich kann vorgesehen sein, dass die Brennkraftmaschine und der erste Elektromotor als Parallelhybridantriebsanordnung betrieben werden. Beispielsweise ist zu diesem Zweck in der Wirkverbindung zwischen der Brennkraftmaschine und dem ersten Elektromotor eine Trennkupplung vorgesehen, während der erste Elektromotor mit der ersten Achse wirkverbunden ist, entweder permanent oder ebenfalls über eine Trennkupplung.

In der Wirkverbindung zwischen dem ersten Elektromotor und der ersten Achse kann zudem ein Getriebe, insbesondere ein Schaltgetriebe, vorgesehen sein. Bei einer derartigen Ausgestaltung ist die Brennkraftmaschine lediglich über den ersten Elektromotor mit der ersten Achse wirkverbindbar. Entweder wird also die erste Achse allein mittels des ersten Elektromotors angetrieben, oder aber gleichzeitig durch die Brennkraftmaschine und den ersten Elektromotor. In letzterem Fall stellen die Brennkraftmaschine und der erste Elektromotor gleichzeitig das zum Antreiben der ersten Achse verwendete Drehmoment zur Verfügung.

Die Erfindung betrifft weiterhin eine Hybridantriebseinrichtung eines Kraftfahrzeugs, insbesondere zur Durchführung des vorstehend beschriebenen Verfahrens, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist, wobei die Hybridantriebseinrichtung dazu ausgebildet ist, die zum Betreiben des zweiten Elektromotors verwendete elektrische Energie in einer ersten Betriebsart von dem, von der Brennkraftmaschine unter Anhebung ihrer Leistung angetriebenen ersten Elektromotor zu erzeugen und in einer zweiten Betriebsart ausschließlich einen Energiespeicher für elektrische Energie zu entnehmen, und wobei in einer dritten Betriebsart der Energiespeicher mittels des von der Brennkraftmaschine unter Anhebung ihrer Leistung angetriebenen ersten Elektromotors aufgeladen wird. Dabei ist vorgesehen, dass bei einer Anforderung eines von dem zweiten Elektromotor erzeugten Drehmoments bei Unterschreiten eines ersten Schwellenwerts durch den Ladestand des Energiespeichers die erste Betriebsart und ansonsten die zweite Betriebsart ausgewählt wird, und dass die dritte Betriebsart ausgewählt wird, wenn kein von dem zweiten Elektromotor erzeugtes Drehmoment angefordert wird und eine während des Aufladens des Energiespeichers durch das Anheben der Leistung der Brennkraftmaschine erwartete Schallemission kleiner als ein Grenzwert ist, wobei die dritte Betriebsart nur dann ausgewählt wird, wenn der Ladestand des Energiespeichers kleiner als ein von dem ersten Schwellenwert verschiedener zweiter Schwellenwert ist.

Auf die Vorteile einer derartigen Ausgestaltung der Hybridantriebseinrichtung sowie des Verfahrens wurde bereits hingewiesen. Die Hybridantriebseinrichtung sowie das Verfahren können gemäß den vorstehenden Ausführungen weitergebildet sein, sodass insoweit auf diese verwiesen wird.

Schließlich betrifft die Erfindung ein gemäß Anspruch 3 ausgestaltetes Kraftfahrzeug.

Beispielsweise soll der erste Elektromotor permanent mit der ersten Achse wirkverbunden sein.

Dies gilt ebenfalls für den zweiten Elektromotor und die zweite Achse. Die Brennkraftmaschine ist dagegen lediglich mit der ersten Achse des Kraftfahrzeugs wirkverbindbar. Das bedeutet, dass in der Wirkverbindung zwischen der ersten Achse und der Brennkraftmaschine die vorstehend bereits erwähnte Trennkupplung vorgesehen ist. Beispielsweise liegt die Trennkupplung in der Wirkverbindung zwischen der Brennkraftmaschine und dem ersten Elektromotor vor, sodass die erste Achse allein mithilfe des ersten Elektromotors oder von der Brennkraftmaschine und dem ersten Elektromotor gemeinsam angetrieben werden kann.

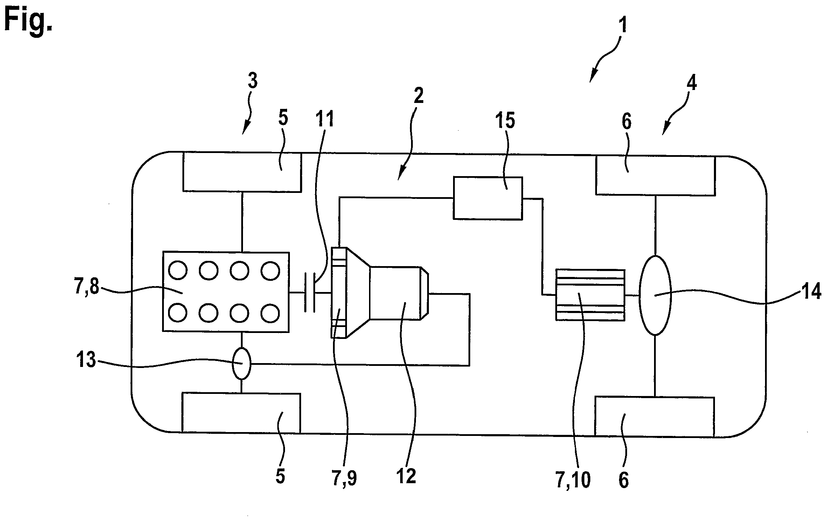

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Kraftfahrzeugs mit einer Hybridantriebseinrichtung.

Die Figur zeigt eine schematische Darstellung eines Kraftfahrzeugs 1 mit einer Hybridantriebseinrichtung 2, die zum Antreiben einer ersten Achse 3 und einer zweiten Achse 4 des Kraftfahrzeugs 1 dient. Die erste Achse 3 verfügt über Räder 5, die zweite Achse 4 über Räder 6. Die erste Achse 3 stellt beispielsweise eine Vorderachse des Kraftfahrzeugs 1 dar, während die zweite Achse 4 mithin eine Hinterachse bildet. Selbstverständlich kann auch eine umgekehrte Anordnung realisiert sein. Die Hybridantriebseinrichtung 2 verfügt über mehrere Antriebsaggregate 7, wobei ein erstes der Antriebsaggregate 7 als Brennkraftmaschine 8, ein weiteres der Antriebsaggregate 7 als erster Elektromotor 9 und ein anderes der Antriebsaggregate 7 als zweiter Elektromotor 10 ausgebildet ist. Die Brennkraftmaschine 8 ist über eine Trennkupplung 11 mit dem ersten Elektromotor 9 wirkverbunden. Dieser steht wiederum in permanenter Wirkverbindung mit der ersten Achse 3, wobei in der Wirkverbindung ein Getriebe 12, insbesondere ein Schaltgetriebe und/oder ein Differential 13 vorgesehen sein können. Das Differential 13 dient dem Aufteilen eines über das Getriebe 12 bereitgestellten Drehmoments auf die Räder 5 der ersten Achse 3.

Es wird mithin deutlich, dass das Antreiben der ersten Achse 3 allein durch den ersten Elektromotor 9 oder aber, bei wenigstens teilweise geschlossener Trennkupplung 11, von der Brennkraftmaschine 8 und dem ersten Elektromotor 9 gemeinsam erfolgen kann. Der zweite Elektromotor 10 steht dagegen über ein Differential 14 in permanenter Wirkverbindung mit der zweiten Achse 4. Auch hier dient das Differential 14 dazu, das von dem zweiten Elektromotor 10 bereitgestellte Drehmoment auf die Räder 6 der zweiten Achse 4 zu verteilen. Sowohl der erste Elektromotor 9 als auch der zweite Elektromotor 10 sind an einen Energiespeicher 15 für elektrische Energie angeschlossen. Sie können mithin mithilfe der in dem Energiespeicher 15 gespeicherten elektrischen Energie betrieben werden. Umgekehrt können sie, falls sie als Generator betrieben werden, auch dem Aufladen des Energiespeichers 15 dienen.

Es ist nun vorgesehen, dass die Hybridantriebseinrichtung 2 in wenigstens zwei Betriebsarten betrieben werden kann, nämlich einer ersten Betriebsart und einer zweiten Betriebsart. In der ersten Betriebsart wird die zum Betreiben des zweiten Elektromotors 10 benötigte elektrische Energie von dem ersten Elektromotor 9 erzeugt. Zu diesem Zweck wird der erste Elektromotor 9 als Generator betrieben und steht bei wenigstens teilweise geschlossener, insbesondere vollständig geschlossener, Trennkupplung 11 in Wirkverbindung mit der Brennkraftmaschine 8. Mithilfe der von der Brennkraftmaschine 8 bereitgestellten Leistung wird also sowohl der erste Elektromotor 9 zum Erzeugen der elektrischen Energie für den zweiten Elektromotor 10 betrieben als auch die erste Achse 3 angetrieben. Entsprechend ist im Vergleich zu einer Betriebsart, in welcher der zweite Elektromotor 10 nicht betrieben wird, eine Anhebung der Leistung der Brennkraftmaschine 8 notwendig.

In der zweiten Betriebsart soll dagegen die elektrische Energie, die zum Betreiben des zweiten Elektromotors 10 dient, ausschließlich dem Energiespeicher 15 entnommen werden. In diesem Fall wird vorzugsweise der erste Elektromotor 9 nicht betrieben, sodass die erste Achse 3 lediglich mittels der Brennkraftmaschine 8 und die zweite Achse 4 lediglich mittels des zweiten Elektromotors 10 angetrieben wird. Auf diese Art und Weise können gleichzeitig die Vorteile eines Einzelachsantriebs und eines Mehrachsantriebs realisiert sein. Insbesondere wird eine Vergrößerung der Schallemission durch die Anhebung der Leistung durch die Anwendung der zweiten Betriebsart vermieden. Die dem Energiespeicher 15 während des Durchführens der zweiten Betriebsart entnommene elektrische Energie kann nachfolgend in einer dritten Betriebsart ersetzt werden, indem der erste Elektromotor 9 und/oder der zweite Elektromotor 10 als Generatoren verwendet werden. Vorzugsweise wird jedoch lediglich der erste Elektromotor 9 zum Aufladen des Energiespeichers 15 verwendet.

### BEZUGSZEICHENLISTE

- 1: Kraftfahrzeug
- 2: Hybridantriebseinrichtung
- 3: 1. Achse
- 4: 2. Achse
- 5: Räder
- 6: Räder
- 7: Antriebsaggregat
- 8: Brennkraftmaschine
- 9: 1. Elektromotor
- 10: 2. Elektromotor
- 11: Trennkupplung
- 12: Getriebe
- 13: Differential
- 14: Differential
- 15: Energiespeicher

## Patentansprüche

1. Verfahren zum Betreiben einer Hybridantriebseinrichtung (2) eines Kraftfahrzeugs (1), wobei die Hybridantriebseinrichtung (2) eine mit einer ersten Achse (3) des Kraftfahrzeugs (1) wirkverbindbare Brennkraftmaschine (8), einen ebenfalls mit der ersten Achse (3) wirkverbindbaren ersten Elektromotor (9) sowie einen mit einer zweiten Achse (4) des Kraftfahrzeugs (1) wirkverbindbaren zweiten Elektromotor (10) aufweist, wobei die zum Betreiben des zweiten Elektromotors (10) verwendete elektrische Energie in einer ersten Betriebsart von dem, von der Brennkraftmaschine (8) unter Anhebung ihrer Leistung angetriebenen ersten Elektromotor (9) erzeugt wird und in einer zweiten Betriebsart ausschließlich einem Energiespeicher (15) für elektrische Energie entnommen wird, und wobei in einer dritten Betriebsart der Energiespeicher (15) mittels des von der Brennkraftmaschine (8) unter Anhebung ihrer Leistung angetriebenen ersten Elektromotors (9) aufgeladen wird, **dadurch gekennzeichnet, dass** bei einer Anforderung eines von dem zweiten Elektromotor (10) erzeugten Drehmoments bei Unterschreiten eines ersten Schwellenwerts durch den Ladestand des Energiespeichers (15) die erste Betriebsart und ansonsten die zweite Betriebsart ausgewählt wird, und dass die dritte Betriebsart ausgewählt wird, wenn kein von dem zweiten Elektromotor (10) erzeugtes Drehmoment angefordert wird und eine während des Aufladens des Energiespeichers (15) durch das Anheben der Leistung der Brennkraftmaschine (8) erwartete Schallemission kleiner als ein Grenzwert ist, wobei die dritte Betriebsart nur dann ausgewählt wird, wenn der Ladestand des Energiespeichers (15) kleiner als ein von dem ersten Schwellenwert verschiedener zweiter Schwellenwert ist.

2. Verfahren nach Anspruch 1, **dadurch gekennzeichnet, dass** die Leistung der Brennkraftmaschine (8) in der ersten Betriebsart derart angehoben wird, dass der zweite Elektromotor (10) ausschließlich mit der von dem ersten Elektromotor (9) erzeugten elektrischen Energie betrieben wird.

3. Hybridantriebseinrichtung (2) eines Kraftfahrzeugs (1), insbesondere zur Durchführung des Verfahrens nach einem oder mehreren der vorhergehenden Ansprüche, die eine mit einer ersten Achse (3) des Kraftfahrzeugs (1) wirkverbindbare Brennkraftmaschine (8), einen ebenfalls mit der ersten Achse (3) wirkverbindbaren ersten Elektromotor (9) sowie einen mit einer zweiten Achse (4) des Kraftfahrzeugs (1) wirkverbindbaren zweiten Elektromotor (10) aufweist, wobei die Hybridantriebseinrichtung (2) dazu ausgebildet ist, die zum Betreiben des zweiten Elektromotors (10) verwendete elektrische Energie in einer ersten Betriebsart von dem, von der Brennkraftmaschine (8) unter Anhebung ihrer Leistung angetriebenen ersten Elektromotor (9) zu erzeugen und in einer zweiten Betriebsart ausschließlich einem Energiespeicher (15) für elektrische Energie zu entnehmen, und wobei in einer dritten Betriebsart der Energiespeicher (15) mittels des von der Brennkraftmaschine (8) unter Anhebung ihrer Leistung angetriebenen ersten Elektromotors (9) aufgeladen wird, **dadurch gekennzeichnet, dass** bei einer Anforderung eines von dem zweiten Elektromotor (10) erzeugten Drehmoments bei Unterschreiten eines ersten Schwellenwerts durch den Ladestand des Energiespeichers (15) die erste Betriebsart und ansonsten die zweite Betriebsart ausgewählt wird, und dass die dritte Betriebsart ausgewählt wird, wenn kein von dem zweiten Elektromotor (10) erzeugtes Drehmoment angefordert wird und eine während des Aufladens des Energiespeichers (15) durch das Anheben der Leistung der Brennkraftmaschine (8) erwartete Schallemission kleiner als ein Grenzwert ist, wobei die dritte Betriebsart nur dann ausgewählt wird, wenn der Ladestand des Energiespeichers (15) kleiner als ein von dem ersten Schwellenwert verschiedener zweiter Schwellenwert ist.

4. Kraftfahrzeug (1) mit einer Hybridantriebseinrichtung (2) nach Anspruch 3.

## Claims

1. Method for operating a hybrid drive device (2) of a motor vehicle (1), the hybrid drive device (2) having an internal combustion engine (8) that can be operatively connected to a first axle (3) of the motor vehicle (1), a first electric motor (9) that can likewise be operatively connected to the first axle (3), and a second electric motor (10) that can be operatively connected to a second axle (4) of the motor vehicle (1), wherein the electrical energy used to operate the second electric motor (10) is generated in a first operating mode by the first electric motor (9) driven by the internal combustion engine (8) with an increase in its output and in a second operating mode is taken exclusively from an energy store (15) for electrical energy, and wherein in a third operating mode the energy store (15) is charged by means of the first electric motor (9) driven by the internal combustion engine (8) with an increase in its output, **characterised in that,** when a torque generated by the second electric motor (10) is requested when the charge level of the energy storage device (15) falls below a first threshold value, the first operating mode and otherwise the second operating mode is selected, and **in that** the third operating mode is selected when no torque generated by the second electric motor (10) is requested and a noise emission expected during the charging of the energy storage device (15) by the increase of the output of the internal combustion engine (8) is smaller than a limit value, wherein the third operating mode is selected only when the charge level of the energy store (15) is smaller than a second threshold value that is different to the first threshold value.

2. Method according to claim 1, **characterised in that** the output of the internal combustion engine (8) is increased in the first operating mode in such a way that the second electric motor (10) is operated exclusively with the electrical energy generated with the first electric motor (9).

3. Hybrid drive device (2) of a motor vehicle (1), in particular for carrying out the method according to one or more of the preceding claims, which has an internal combustion engine (8) that can be operatively connected to a first axle (3) of the motor vehicle (1), a first electric motor (9) that can likewise be operatively connected to the first axle (3), and a second electric motor (10) that can be operatively connected to a second axle (4) of the motor vehicle (1), wherein the hybrid drive device (2) is configured to generate, in a first operating mode, the electrical energy used to operate the second electric motor (10) from the first electric motor (9) that is driven by the internal combustion engine (8) with an increase in its output, and in a second operating mode to take the same exclusively from an energy store (15) for electrical energy, and wherein in a third operating mode the energy store (15) is charged by means of the first electric motor (9) driven by the internal combustion engine (8) with an increase in its output, **characterised in that,** when a torque generated by the second electric motor (10) is requested when the charge level of the energy storage device (15) falls below a first threshold value, the first operating mode and otherwise the second operating mode is selected, and **in that** the third operating mode is selected when no torque generated by the second electric motor (10) is requested and a noise emission expected during the charging of the energy storage device (15) by the increase of the output of the internal combustion engine (8) is smaller than a limit value, wherein the third operating mode is selected only when the charge level of the energy store (15) is smaller than a second threshold value that is different to the first threshold value.

4. Motor vehicle (1) comprising a hybrid drive device (2) according to claim 3.

## Revendications

1. Procédé pour faire fonctionner un système de propulsion hybride (2) d'un véhicule à moteur (1), dans lequel le système de propulsion hybride (2) présente un moteur à combustion interne (8) pouvant être relié fonctionnellement à un premier essieu (3) du véhicule à moteur (1), un premier moteur électrique (9) pouvant également être relié fonctionnellement au premier essieu (3), et un second moteur électrique (10) pouvant être relié fonctionnellement au second essieu (4) du véhicule à moteur (1), dans lequel l'énergie électrique utilisée pour faire fonctionner le second moteur électrique (10) est produite dans un premier mode de fonctionnement par le premier moteur électrique (9) entraîné par le moteur à combustion interne (8) avec augmentation concomitante de la puissance de ce dernier, et dans un deuxième mode de fonctionnement, est prélevée exclusivement dans un accumulateur d'énergie (15) pour l'énergie électrique, et dans leque dans un troisième mode de fonctionnement, l'accumulateur d'énergie (15) est chargé au moyen du premier moteur électrique (9) entraîné par le moteur à combustion interne (8) avec augmentation concomitante de la puissance de ce dernier, **caractérisé en ce que** lorsqu'un couple généré par le second moteur électrique (10) est demandé lorsque le niveau de charge de l'accumulateur d'énergie (15) tombe en dessous d'une première valeur seuil, le premier mode de fonctionnement est sélectionné, et sinon le deuxième mode de fonctionnement est sélectionné, et **en ce que** le troisième mode de fonctionnement est sélectionné si aucun couple généré par le second moteur électrique (10) n'est demandé et une émission de bruit attendue lors de la charge de l'accumulateur d'énergie (15) par augmentation de la puissance du moteur à combustion interne (8) est inférieure à une valeur de seuil, dans lequel le troisième mode de fonctionnement n'est sélectionné que lorsque le niveau de charge de l'accumulateur d'énergie (15) est inférieur à une seconde valeur de seuil différente de la première valeur seuil.

2. Procédé selon la revendication 1, **caractérisé en ce que** la puissance du moteur à combustion interne (8) est augmentée dans le premier mode de fonctionnement de telle sorte que le second moteur électrique (10) fonctionne exclusivement avec l'énergie électrique générée par le premier moteur électrique (9).

3. Système de propulsion hybride (2) d'un véhicule à moteur (1), en particulier pour la mise en œuvre du procédé selon une ou plusieurs des revendications précédentes, qui présente un moteur à combustion interne (8) pouvant être relié fonctionnellement à un premier essieu (3) du véhicule à moteur (1), un premier moteur électrique (9) pouvant également être relié fonctionnellement au premier essieu (3), et un second moteur électrique (10) pouvant être relié fonctionnellement au second essieu (4) du véhicule à moteur (1), dans lequel le système de propulsion hybride est formé pour que l'énergie électrique utilisée pour faire fonctionner le second moteur électrique (10) soit produite dans un premier mode de fonctionnement par le premier moteur électrique (9) entraîné par le moteur à combustion interne (8) avec augmentation concomitante de la puissance de ce dernier, et dans un deuxième mode de fonctionnement, soit prélevée exclusivement dans un accumulateur d'énergie (15) pour l'énergie électrique, et dans lequel dans un troisième mode de fonctionnement, l'accumulateur d'énergie (15) est chargé au moyen du premier moteur électrique (9) entraîné par le moteur à combustion interne (8) avec augmentation concomitante de la puissance de ce dernier, **caractérisé en ce que** lorsqu'un couple généré par le second moteur électrique (10) est demandé lorsque le niveau de charge de l'accumulateur d'énergie (15) tombe en dessous d'une première valeur seuil, le premier mode de fonctionnement est sélectionné, et sinon le deuxième mode de fonctionnement est sélectionné, et **en ce que** le troisième mode de fonctionnement est sélectionné si aucun couple généré par le second moteur électrique (10) n'est demandé et une émission de bruit attendue lors de la charge de l'accumulateur d'énergie (15) par augmentation de la puissance du moteur à combustion interne (8) est inférieure à une valeur de seuil, dans lequel le troisième mode de fonctionnement n'est sélectionné que lorsque le niveau de charge de l'accumulateur d'énergie (15) est inférieur à une seconde valeur de seuil différente de la première valeur seuil.

4. Véhicule à moteur (1) avec un système de propulsion hybride (2) selon la revendication 3.
